# EUROPÄISCHE PATENTSCHRIFT

(11) **EP 2 753 465 B1**
(45) Veröffentlichungstag und Bekanntmachung des Hinweises auf die Patenterteilung: **17.08.2016**
(21) Anmeldenummer: 12765993.6
(22) Anmeldetag: 10.09.2012
(51) Int. Cl.: B29C 49/42, B29C 49/06, B29C 49/12, B29C 49/16, B29C 49/36, B29C 49/64

(54) **VORRICHTUNG ZUM TRANSPORT VON VORFORMLINGEN FÜR DAS BLASFORMEN VON BEHÄLTERN**
DEVICE FOR TRANSPORTING PREFORMS FOR BLOW MOLDING CONTAINERS
DISPOSITIF DE TRANSPORT DE PREFORMES POUR LE MOULAGE PAR SOUFFLAGE DE RECIPIENTS

(30) Priorität: 09.09.2011 DE 102011113310
(43) Veröffentlichungstag der Anmeldung: 16.07.2014
(73) Patentinhaber: KHS Corpoplast GmbH, 22145 Hamburg (DE)
(72) Erfinder: LINKE, Michael, 22159 Hamburg (DE); BAUMGARTE, Rolf, 22926 Ahrensburg (DE)
(74) Vertreter: Hausfeld, Norbert
(86) Internationale Anmeldenummer: PCT/EP2012/003789
(87) Internationale Veröffentlichungsnummer: WO 2013/034309

(56) Entgegenhaltungen:
- EP-A1- 1 880 825
- DE-A1-102008 023 701
- US-B1- 6 273 705

## Beschreibung

Die Erfindung betrifft eine Vorrichtung zur Blasformung von Behältern, die eine Heizstrecke zur Erwärmung von Vorformlingen aus einem thermoplastischen Material aufweist und die mit einer Blaseinrichtung versehen ist, die mindestens eine Blasstation zur Umformung der Vorformlinge in die Behälter aufweist, sowie bei der ein Tragelement zum Transport der Vorformlinge im Bereich eines in einen Mündungsabschnitt des Vorformlings einführbaren Kopfes mindestens zwei positionierbare Klemmelemente aufweist sowie bei der die Klemmelemente mindestens bereichsweise gerundet ausgebildet sind und wobei die Klemmelemente entlang eines Außenumfanges des Kopfes relativ zueinander mit einem Abstand angeordnet sind, sowie bei der mindestens eines der Klemmelemente in einer bezüglich einer Längsachse des Tragelementes seitlich am Kopf angeordneten Vertiefung positioniert ist, wobei die Vertiefung schräg zur Längsachse verlaufende obere und untere Gleitflächen zur Beaufschlagung des Klemmelementes aufweist und wobei der Kopf ein mit der unteren Gleitfläche versehenes Kopfunterteil und ein mit der oberen Gleitfläche versehenes Kopfoberteil aufweist.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert. Die einleitend erwähnte Einleitung des unter Druck stehenden Gases umfaßt auch die Druckgaseinleitung in die sich entwickelnde Behälterblase sowie die Druckgaseinleitung in den Vorformling zu Beginn des Blasvorganges.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unter-schiedlicher Handhabungseinrichtungen transportiert werden. Bekannt ist die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Klemmdornen, die zur Halterung in einen Mündungsbereich des Vorformlings einführbar sind, gehören ebenfalls zu den verfügbaren Konstruktionen.

Eine Handhabung von Behältern und Vorformlingen unter Verwendung von Übergaberädern wird beispielsweise in der DE-OS 199 06 438 bei einer Anordnung eines Übergaberades zwischen einem Blasrad und einer Ausgabestrecke und eines weiteren Übergaberades zwischen der Heizstrecke und dem Blasrad beschrieben.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Die für einen Transport der Vorformlinge verwendeten Transportdorne können noch nicht allen Anforderungen gerecht werden, die an einen sicheren Transport der Vorformlinge mit hoher Transportgeschwindigkeit gestellt werden. Insbesondere die Transportdorne, die in einen Mündungsbereich der Vorformlinge eingeführt werden, besitzen noch eine Reihe von Mängel. Die bekannten Klemmdorne sind in der Regel aus einem harten Kern ausgebildet, auf den außenseitig ein O-Ring aus einem Elastomer aufgesteckt ist. Bei einem Einführen des Klemmdornes in den Mündungsbereich des Vorformlings hinein wird der O-Ring elastisch verformt und führt zu einer Fixierung des Vorformlings am Klemmdorn.

Eine derartige Halterung der Vorformlinge erweist sich bei zunehmender Betriebsdauer als unzuverlässig. Zum einen unterliegen die Innendurchmesser der Vorformlinge Fertigungstoleranzen, die zu unterschiedlichen Klemmkräften führen. Darüber hinaus verändert sich die Elastizität und somit die erzeugte federnde Kraft des elastomeren Materials mit zunehmender Alterung sowie in Abhängigkeit von der jeweils herrschenden Temperatur. Es ist auch nicht möglich, vorsorglich eine zu große Spannung auf den Mündungsbereich aufzubringen, da eine derartig große Spannung zu Verformungen des Mündungsbereiches führen würde. Aufgrund dieser Eigenschaften der elastomeren Materialien ist damit zu rechnen, dass eine mehr oder weniger große Anzahl von Vorformlingen von den Klemmdornen herunterfällt und nicht für eine nachfolgende Blasverformung zur Verfügung steht.

In der DE 10 2005 011 805 wird bereits ein aktiv steuerbares Klemmelement beschrieben, das aus einem elastomeren Material besteht und als federartiges Hohlprofil ausgebildet ist. Gegenüber der Verwendung von Vollprofilen, beispielsweise in der Form von O-Ringen, konnten hiermit zwar bereits wesentliche Verbesserungen erreicht werden, die Anforderungen an eine über einen langen Betriebszeitraum gleichmäßige und reproduzierbare Entfaltung von Klemmkräften konnten aber trotzdem noch nicht in zufriedenstellender Art und Weise erfüllt werden.

In der DE 10 2008 023 701 A1 wird ein aktiv steuerbares Klemmelement beschrieben, das aus einem keramischen Material ausgebildet ist. Diese Konstruktion erweist sich zwar als äußerst funktionell, verursacht aufgrund der realisierten aktiven Steuerbarkeit aber relativ hohe Fertigungskosten.

Die EP 1 880 825 A1 zeigt einen Transportdorn mit mehreren passiven kugelförmigen Klemmelementen, die in einem zylindrischen Kugelkäfig mit mehreren radial außen liegenden Durchbrüchen aufgenommen sind. Der Kopf dieses Transportdornes besteht aus einem Kopfunter- und einem Kopfoberteil, die feststehend aneinander befestigt sind. Ein zwischen dem Kopfunterteil und dem Kopfunterteile angeordnetes elastisches Element drängt die Kugeln radial nach außen.

Die US 6,273,705 B1 zeigt einen Blasdorn mit aktiv steuerbaren, nämlich mit druckluftbeaufschlagten Klemmelementen. Ohne Druckluftbeaufschlagung können Vorformlinge von diesem Blasdorn nicht gehalten werden, wobei die Druckluftbeaufschlagung nur während des Blasprozesses erfolgt. Für einen Transport z.B. durch die Heizstrecke einer Blasmaschine hindurch ist dieser Dorn daher ungeeignet.

Aus dem Stand der Technik sind somit bereits sowohl aktiv steuerbare als auch passive Klemmelemente bekannt. Der Stand der Technik stellt jedoch noch kein mit Klemmelementen versehendes Tragelement bereit, das sowohl eine hohe Funktionalität aufweist als auch preiswert zu fertigen ist.

Aufgabe der vorliegenden Erfindung ist es, eine Vorrichtung der einleitend genannten Art derart zu konstruieren, dass ein zuverlässiger Transport der Vorformlinge bei hoher Transportgeschwindigkeit unterstützt wird und zusätzlich eine preiswerte Fertigung des Transportelementes erreicht wird.

Diese Aufgabe wird erfindungsgemäß dadurch gelöst, dass das Kopfoberteil und das Kopfunterteil von mindestens einer Feder relativ zueinander verspannt sind, die das Kopfoberteil in einem dem Kopfunterteil abgewandten Bereich beaufschlagt.

Durch die Beaufschlagung der dem Kopfunterteil abgewandten Oberseite des Kopfoberteiles mit der Feder, vorzugsweise einer Druckfeder, erfolgt bei einem Aufschieben des Mündungsbereiches eines Vorformlings auf den Kopf eine Beaufschlagung der aus den Vertiefungen des Kopfes herausragenden Klemmelemente derart, dass diese in Richtung auf das Kopfoberteil verschoben werden. Die Klemmelemente übertragen hierbei die in Richtung der Längsachse des Tragelementes wirkenden Kräfte auf das Kopfoberteil und verschieben dieses entgegen der einwirkenden Federkraft. Hierdurch wird eine Relativbewegung zwischen dem Kopfoberteil und dem Kopfunterteil derart verursacht, dass die Größe der Vertiefungen erhöht wird. Hierdurch können die Klemmelemente weiter in die Vertiefungen hineinwandern und ermöglichen ein voll-ständiges Aufschieben des Mündungsabschnittes des Vorformlings auf den Kopf des Tragelementes.

Für die Funktion des mit einer passiven Klemmfunktion ausgestatteten Kopfes des Tragelementes wesentlich ist somit, dass die bei der Durchführung des Aufschiebevorganges vom Mündungsabschnittes des Vorformlings auf den Kopf übertragenden Kräfte zu einer Vergrößerung der Vertiefungen und somit zu einer Reduktion der zwischen den Klemmelementen und dem Mündungsabschnitt des Vorformlings wirkenden Klemmkräfte führt. Hierdurch wird ein vergleichsweise wenig Kraft aufwendendes und den Vorformling schonendes Aufschieben des Vorformlings auf den Kopf unterstützt. Nach einer Beendigung des Aufschiebevorganges ist der Kopf des Tragelementes innerhalb des Mündungsabschnittes des Vorformlings angeordnet und beaufschlagt mit den Klemmelementen die Innenseite des Mündungsabschnittes. Alternativ ist statt einer Halterung von Vorformlingen auch eine Halterung von geblasenen Behältern unter Verwendung des erfindungsgemäßen Kopfes des Tragelementes möglich.

Eine Anordnung der Feder derart, dass das Kopfoberteil in einem dem Kopfunterteil abgewandten Bereich von der Feder beaufschlagt wird ermöglicht es insbesondere, die Feder in einem Bereich außerhalb des Mündungsabschnittes des Vorformlings zu positionieren. Hierdurch wird die Feder in einem Bereich angeordnet, der zu einem ausreichend groß zur Aufnahme der Feder ist, sodass die Verwendung der Feder nicht zu einer unnötig komplizierten Geometrie des Kopfes führt. Darüber hinaus erfolgt die Anordnung der Feder in einem Bereich, der typischerweise bei einer Beheizung der Vorformlinge nicht von Heizstrahlung beaufschlagt wird.

Gegenüber einer direkten Beaufschlagung der Klemmelemente durch eines oder mehrere federnde Elemente besitzt die erfindungsgemäße Konstruktion somit sowohl hinsichtlich der Erreichung einer sowohl kompakten als auch übersichtlich strukturierten Konstruktion als auch hinsichtlich einer Bereitstellung einer dauerhaft hochwertigen Funktion erhebliche Vorteile.

Gemäß einer üblichen Verwendung ist das Kopfunterteil vollständig in den Mündungsabschnitt des Vorformlings eingeführt und das Kopfoberteil ragt im Bereich seiner dem Kopfunterteil abgewandten Ausdehnung aus dem Mündungsabschnitt des Vorformlings heraus.

Eine vorgebare Positionierung des Kopfunterteiles wird dadurch unterstützt, dass das Kopfunterteil mit einem Schaft verbunden ist.

Eine Relativbewegung zwischen dem Kopfunterteil und dem Kopfoberteil wird dadurch ermöglicht, dass sich der Schaft durch das Kopfoberteil hindurcherstreckt.

Ein störungsfreier Betrieb wird dadurch unterstützt, dass die Feder als Druckfeder ausgebildet ist.

Zur Erreichung einer kompakten Konstruktion wird vorgeschlagen, dass sich der Schaft durch die Feder hindurcherstreckt.

Die federnde Verspannung des Kopfoberteiles relativ zum Kopfunterteil kann dadurch realisiert werden, dass sich die Feder an einem Vorsprung des Schaftes abstützt.

Gemäß einer Konstruktionsvariante ist daran gedacht, dass der Vorsprung durch einen Absatz ausgebildet ist.

Eine preiswerte Konstruktion wird dadurch unterstützt, dass der Schaft aus einem Stab und einem den Stab bereichsweise umgebenden Rohr ausgebildet ist.

Eine vorteilhafte Übertragung von Klemmkräften wird dadurch erreicht, dass das Klemmelement wenigstens bereichsweise zylindrisch ausgebildet ist und im Bereich seiner in Richtung der Elementlängsachse weisenden Endbereiche Verjüngungen aufweist.

Für eine Positionierung der Klemmelemente erweist es sich als vorteilhaft, dass die Verjüngungen kegelstumpfartig ausgebildet sind.

Eine flächige Kraftübertragung kann dadurch erreicht werden, dass die Verjüngungen relativ zur Elementlängsachse Neigungswinkel aufweisen, die den Neigungswinkeln der Gleitflächen entsprechen.

Die gerundete Ausbildung der Klemmelemente und die Verwendung von mehreren separaten Klemmelementen ermöglicht eine definierte radiale Positionierung der Klemmelemente, ohne dass eine elastische Verformung erforderlich ist. Die Klemmelemente können exakt in einer radialen Richtung zur Durchführung des Klemmvorganges positioniert werden. Durch die gerundete Kontur wird ein einfaches Abgleiten an zugeordneten Leitflächen unterstützt. Darüber hinaus können die Klemmkräfte lokal begrenzt in den Bereich einer Innenbegrenzung des Mündungsabschnittes des Vorformlings eingebracht werden.

Ein Transport der Vorformlinge ohne Durchführung von Wendevorgängen wird dadurch unterstützt, dass die Vorformlinge mindestens entlang eines Teiles ihres Transportweges vom Tragelement mit ihren Mündungsabschnitten in lotrechter Richtung nach oben orientiert transportiert werden.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: eine Seitenansicht eines Tragelementes,
- Fig. 6: einen Vertikalschnitt gemäß Schnittlinie VI in Fig. 5,
- Fig. 7: eine perspektivische Darstellung eines Kopfes des Tragelementes,
- Fig. 8: eine vergrößerte Darstellung der Einzelheit VIII in Fig. 6 und
- Fig. 9: einen Horizontalschnitt gemäß Schnittlinie IX in Fig. 8.

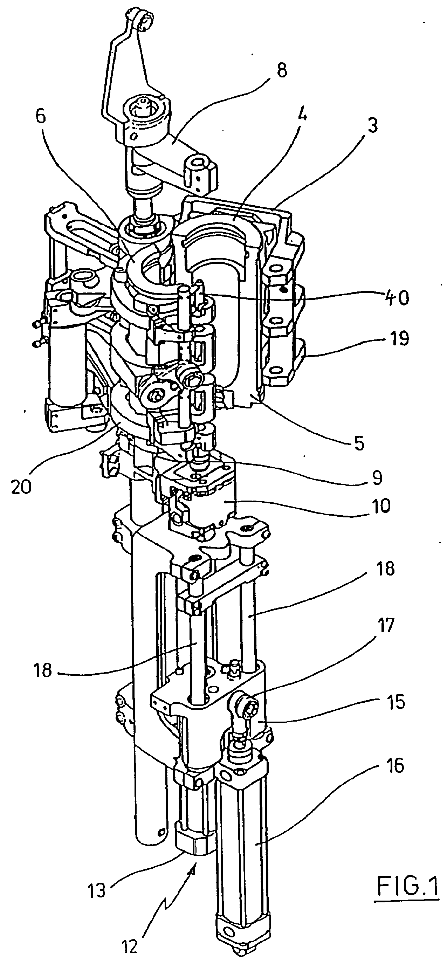

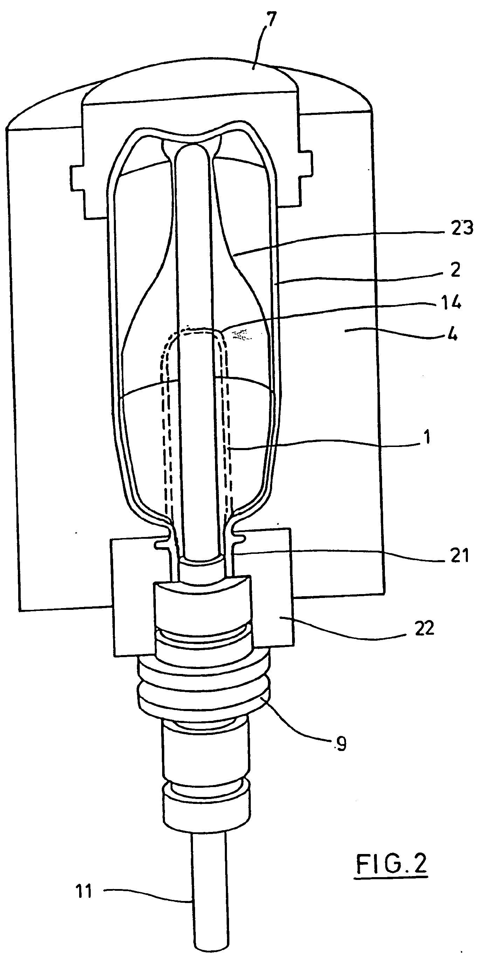

Der prinzipielle Aufbau einer Vorrichtung zur Umformung von Vorformlingen (1) in Behälter (2) ist in Fig. 1 und in Fig. 2 dargestellt. Die Anordnung kann dabei wie dargestellt oder in einer vertikalen Ebene um 180° gedreht erfolgen.

Die Vorrichtung zur Formung des Behälters (2) besteht im Wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Halteelement (9) fixiert sein. Es ist beispielsweise möglich, den Vorformling (1) über Zangen oder andere Handhabungsmittel direkt in die Blasform (4) einzusetzen.

Zur Ermöglichung einer Druckluftzuleitung ist unterhalb der Blasform (4) ein Anschlußkolben (10) angeordnet, der dem Vorformling (1) Druckluft zuführt und gleichzeitig eine Abdichtung vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgerührt, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad (25) angeordnet sind

Bei der in Fig. 1 dargestellten Ausführungsform ist das Recksystem derart ausgebildet, dass eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, dass von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (40).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

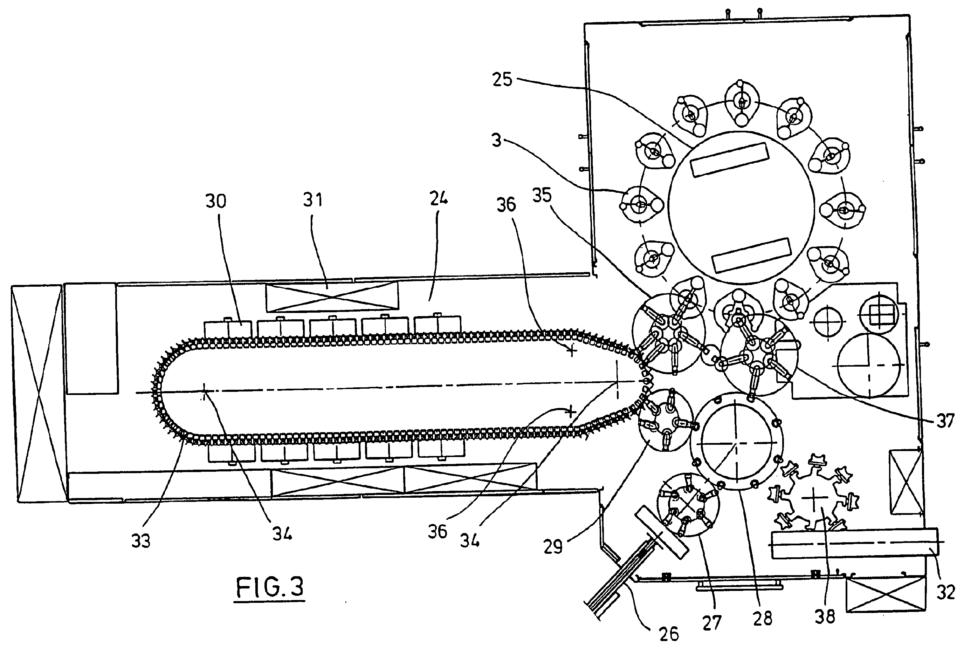

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese von einem Übergaberad (35) an das Blasrad (25) übergeben, in dessen Bereich die Blasstationen (3) angeordnet sind. Die fertig geblasenen Behälter (2) werden von weiteren Übergaberädern (37, 28, 38) einer Ausgabestrecke (32) zugeführt. Das Übergaberad (37) ist dabei als ein Entnahmerad das Übergaberad (38) als ein Ausgaberad ausgebildet.

Um einen Vorformling (1) derart in einen Behälter (2) umformen zu können, dass der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, dass bei der dargestellten Ausführungsform die Heizstrecke (24) aus einer Vielzahl umlaufender Transportelemente (33) ausgebildet ist, die kettenartig aneinandergereiht und entlang von Umlenkrädern (34, 36) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (27) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (27) und des Blasrades (25) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (27) und zum Blasrad (25).

Alternativ zur Verwendung von kettenartigen Transportelementen (33) ist es beispielsweise auch möglich, ein rotierendes Heizrad zu verwenden.

Nach einem fertigen Blasen der Behälter (2) werden diese vom Übergaberad (38) aus dem Bereich der Blasstationen (3) herausgeführt und zur Ausgabestrecke (32) transportiert.

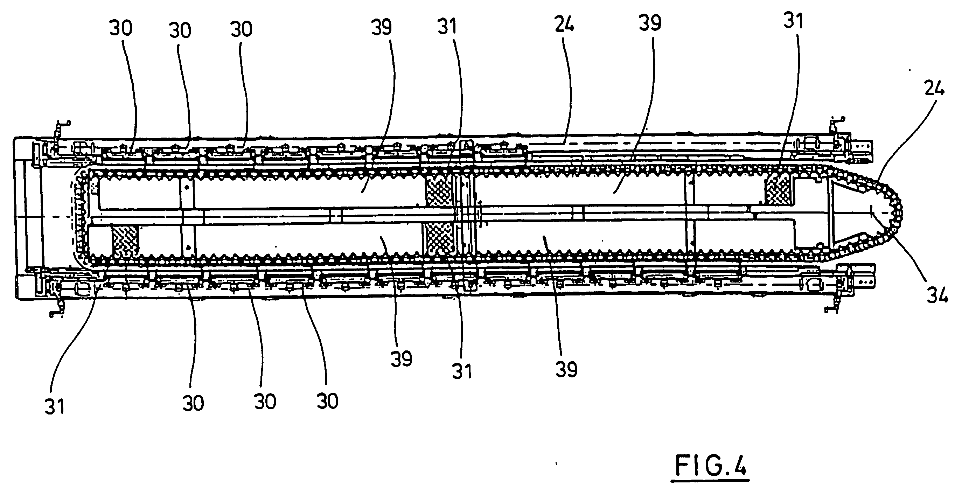

In der in Fig. 4 dargestellten modifizierten Heizstrecke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im Wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

Ein Transport der Vorformlinge (1) und der Behälter (2) durch die Blasmaschine kann in unterschiedlicher Art und Weise erfolgen. Gemäß einer Ausführungsvariante werden die Vorformlinge zumindest entlang des wesentlichen Teiles ihres Transportweges von Transportdornen getragen. Es ist aber auch möglich, einen Transport der Vorformlinge unter Verwendung von Zangen durchzuführen, die außenseitig am Vorformling angreifen, oder Innendorne zu verwenden, die in einen Mündungsbereich des Vorformlings eingeführt werden. Ebenfalls sind hinsichtlich der räumlichen Orientierung der Vorformlinge unterschiedliche Varianten denkbar.

Gemäß einer Variante wird der Vorformling im Bereich der Vorformlingseingabe (26) mit seiner Mündung in lotrechter Richtung nach oben orientiert zugeführt, anschließend gedreht, entlang der Heizstrecke (24) und des Blasrades (25) mit seiner Mündung in lotrechter Richtung nach unten orientiert gefördert und vor einem Erreichen der Ausgabestrecke (32) wieder gedreht. Gemäß einer anderen Variante wird der Vorformling (2) im Bereich der Heizstrecke (24) mit seiner Mündung in lotrechter Richtung nach unten orientiert beheizt, vor Erreichen des Blasrades (25) jedoch wieder um 180° gedreht.

Gemäß einer dritten Ausführungsvariante durchläuft der Vorformling den gesamten Bereich der Blasmaschine ohne Durchführung von Wendevorgängen mit seiner Mündung in lotrechter Richtung nach oben orientiert.

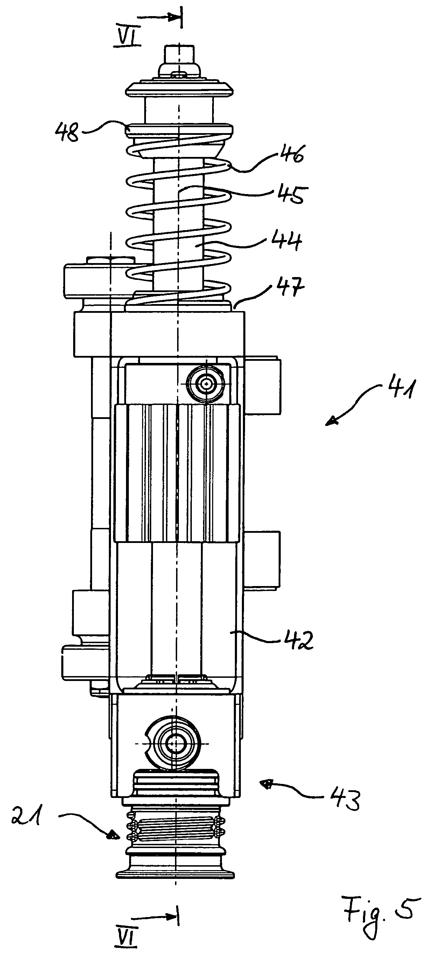

Fig. 5 zeigt eine teilweise Darstellung einer Seitenansicht eines Vorformlings (1), in dessen Mündungsabschnitt (21) bereichsweise ein Tragelement (41) eingeführt ist.

Das Tragelement (41) weist eine Elementbasis (42), einen dem Vorformling (1) zugewandten Kopf (43) sowie einen mit dem Kopf (43) verbundenen Schaft (44) auf. Der Schaft (44) mit dem Kopf (43) ist relativ zur Elementbasis (42) in Richtung einer Elementlängsachse (45) beweglich. Eine Grundposition des Schaftes (44) relativ zur Elementbasis (42) kann von einer Feder (46) vorgegeben werden. Die Feder (46) ist beim dargestellten Ausführungsbeispiel zwischen einer Oberseite (47) der Elementbasis (42) und einem seitlich über den Schaft (44) überstehenden Endsegment (48) angeordnet.

Gemäß einem typischen Ausführungsbeispiel können eine Mehrzahl von Elementbasen (42) kettenartig miteinander verbunden werden oder mit einer umlaufenden Transportkette verbunden werden. Das Tragelement (41) kann aber auch an umlaufenden Übergaberädern oder sonstigen Einrichtungen angebracht sein.

Ebenfalls erfolgt gemäß einem typischen Ausführungsbeispiel eine Positionierung des Schaftes (44) relativ zur Elementbasis (42) kurvengesteuert über eine Kurve, die sich zumindest abschnittweise entlang eines Transportweges des Tragelementes (41) erstreckt.

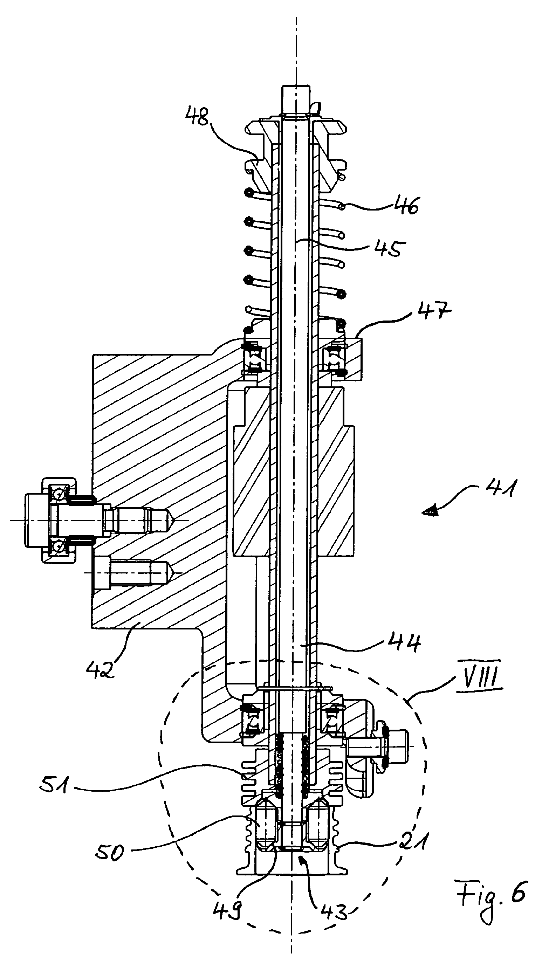

Fig. 6 zeigt in einem Längsschnitt die Positionierung des Kopfes (43) innerhalb eines Mündungsabschnittes (21) eines Vorformlings (1) oder eines Behälters (2). Es ist zu erkennen, dass der Kopf (43) Vertiefungen (49) aufweist, in denen Klemmelemente (50) angeordnet sind. Außerhalb des in den Mündungsabschnitt (21) einführbaren Bereiches kann der Kopf (43) einen Kühlkörper (51) aufweisen, der mit Kühlrippen zur Wärmeabstrahlung versehen ist.

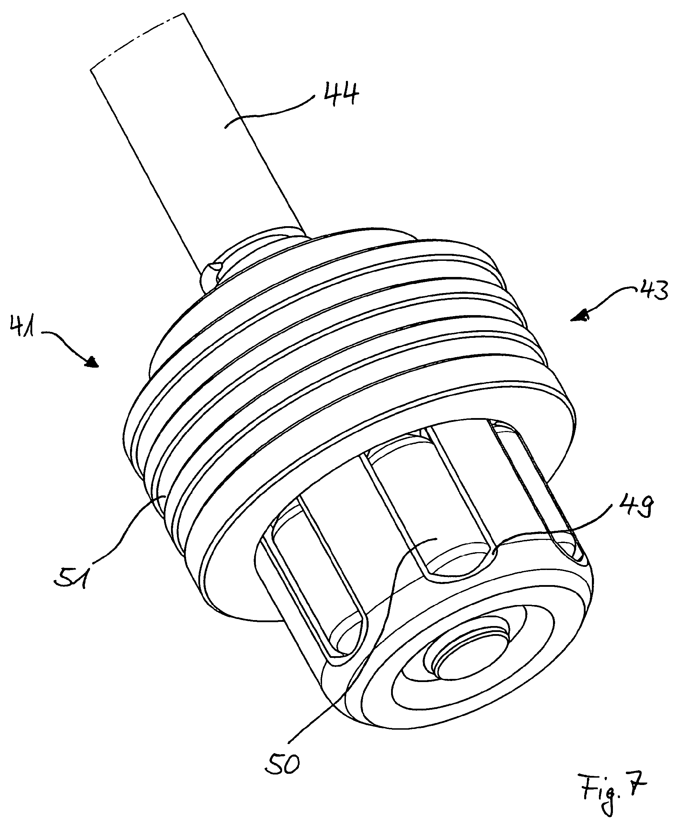

Fig. 7 zeigt eine perspektivische Darstellung des Kopfes (43) zur weiteren Veranschaulichung insbesondere der Anordnung der Klemmelemente (50) in den Vertiefungen (49). Es ist zu erkennen, dass die Klemmelemente (50) eine walzenartige Grundkontur mit sich verjüngenden Endsegmenten besitzen. Die Endsegmente können beispielsweise kegelstumpfartig ausgeführt sein.

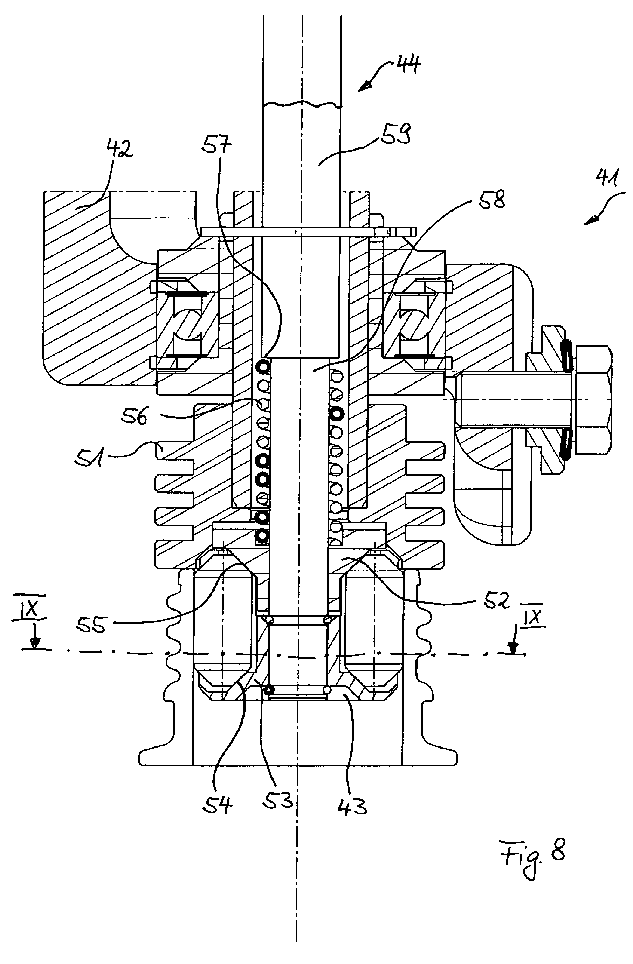

Fig. 8 zeigt eine vergrößerte Darstellung der Einzelheit VIII in Fig. 6. Aus Fig. 8 ist zu erkennen, dass der Kopf (43) aus einem Kopfoberteil (52) und einem Kopfunterteil (53) besteht. Das Kopfunterteil (53) ist mit dem Schaft (44) verbunden. Der Schaft (44) erstreckt sich durch das Kopfoberteil (52) hindurch. Während das Kopfunterteil (53) in seiner Bewegung starr mit dem Schaft (44) verbunden ist, ist das Kopfoberteil (52) am Schaft mit einer Feder (56) abgestützt. Da die Feder (56) eine Druckfeder ist und das Kopfoberteil (52) an der dem Kopfunterteil abgewandten Seite beaufschlagt, werden Kopfoberteil (52) und Kopfunterteil (53) aufeinander zu gedrückt.

Ebenfalls veranschaulicht Fig. 8, dass das Kopfunterteil (53) zur bereichsweisen Begrenzung der Vertiefung (49) eine untere Gleitfläche (54) aufweist. Das Kopfoberteil (52) ist ebenfalls zur bereichsweisen Begrenzung der Vertiefung (49) mit einer oberen Gleitfläche (55) versehen. Bei einer Anordnung einer Mehrzahl von Vertiefungen (49) entlang des Außenumfanges des Kopfes (43) sind eine einer Anzahl der Vertiefungen (49) entsprechende Anzahl von oberen und unteren Gleitflächen (54, 55) verwendet.

In Richtung der Elementlängsachse (45) ist auf einer dem Kopfunterteil (53) abgewandten Seite des Kopfoberteiles (52) eine Feder (56) angeordnet, die das Kopfoberteil (52) relativ zum Schaft (44) verspannt. Als Stützfläche für die Feder (56) weist der Schaft (44) hierzu einen Absatz (57) auf. Alternativ können aber auch andere Abstützungselemente für die Feder (56) verwendet werden.

Der Absatz (57) kann in einer einfachen Weise durch eine zweiteilige Ausbildung des Schaftes (44) erreicht werden. Im Bereich seiner dem Kopf (43) zugewandten Ausdehnung besteht der Schaft (44) hierzu aus einem Stab, der in ein rohrförmiges Außenteil eingeführt ist. Im Bereich des Endes des rohrförmigen Teiles wird der Absatz (57) bereitgestellt.

Die Gleitflächen (54, 55) sind jeweils geneigt zur Elementlängsachse (45) angeordnet. Ebenfalls geneigt zur Längsachse (45) verlaufen Begrenzungsflächen der Verjüngungen der Klemmelemente (50). Vorzugsweise sind die Neigungswinkel der Begrenzungsflächen der Verjüngungen im Wesentlichen gleich den Neigungswinkeln der Gleitflächen (54, 55) relativ zur Elementlängsachse (45) gewählt.

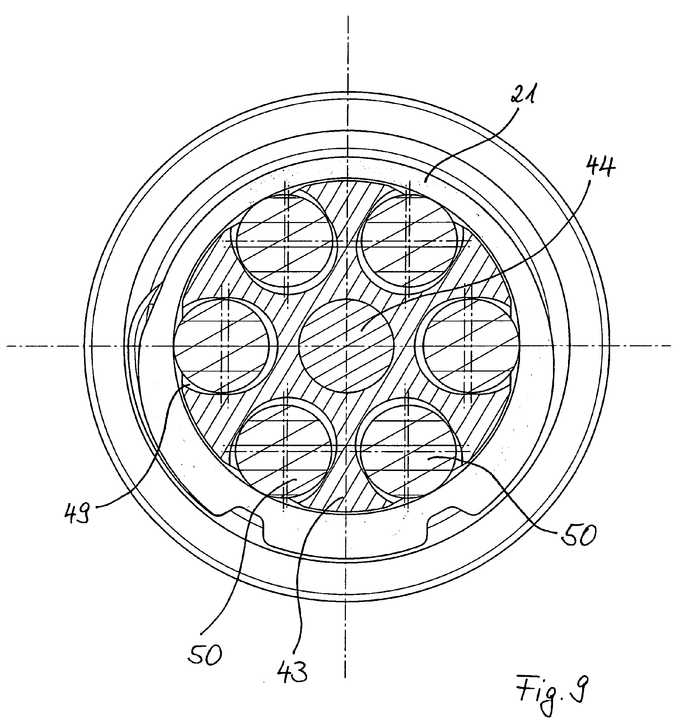

Fig. 9 veranschaulicht in einem Horizontalschnitt die Anordnung einer Mehrzahl von Klemmelementen (50) jeweils in zugeordneten Vertiefungen (49). Das Ausführungsbeispiel in Fig. 9 zeigt die Verwendung von sechs Klemmelementen (50) in sechs Vertiefungen (49). Die Klemmelemente (50) beaufschlagen eine Innenseite des Mündungsabschnittes (21).

Als besonders vorteilhaft erweist es sich, dass die Klemmelemente (50) den Mündungsabschnitt (21) von innen her beaufschlagen. Ein äußerer Bereich des Mündungsabschnittes (21) bleibt hierdurch für eine Handhabung, beispielsweise durch Zangen, frei. Darüber hinaus wird eine Beschädigung des empfindlichen Gewindebereiches des Mündungsabschnittes (21) vermieden. Das Gewinde dient zu einem späteren Aufschrauben von Verschlußkappen eines befüllten Behälters (2) und Beschädigungen würden hier zu Undichtigkeiten führen.

## Patentansprüche

1. Vorrichtung zur Blasformung von Behältern (2), die eine Heizstrecke (24) zur Erwärmung von Vorformlingen (1) aus einem thermoplastischen Material aufweist und die mit einer Blaseinrichtung (25) versehen ist, die mindestens eine Blasstation (3) zur Umformung der Vorformlinge (1) in die Behälter (2) aufweist, sowie bei der ein Tragelement (41) zum Transport der Vorformlinge (1) im Bereich eines in einen Mündungsabschnitt (21) des Vorformlings (1) einführbaren Kopfes (43) mit einer passiven Klemmfunktion mindestens zwei positionierbare Klemmelemente (50) aufweist, sowie bei der die Klemmelemente (50) gerundet ausgebildet sind und wobei die Klemmelemente (50) mindestens bereichsweise entlang eines Außenumfanges des Kopfes (43) relativ zueinander mit einem Abstand angeordnet sind, sowie mindestens eines der Klemmelemente (50) in einer bezüglich einer Längsachse des Tragelementes (41) seitlich am Kopf (43) angeordneten Vertiefung (49) positioniert ist, wobei die Vertiefung (49) schräg zur Längsachse (45) verlaufende obere und untere Gleitflächen (54, 55) zur Beaufschlagung des Klemmelementes (50) aufweist und wobei der Kopf (43) ein mit der unteren Gleitfläche (54) versehenes Kopfunterteil (53) und ein mit der oberen Gleitfläche (55) versehenes Kopfoberteil (52) aufweist, **dadurch gekennzeichnet, dass** das Kopfoberteil (52) und das Kopfunterteil (53) von mindestens einer Feder (56) relativ zueinander verspannt sind, die das Kopfoberteil (52) in einem dem Kopfunterteil (53) abgewandten Bereich beaufschlägt.

2. Vorrichtung nach Anspruch 1, **dadurch gekennzeichnet, dass** das Tragelement (41) zur Halterung eines mit seinem Mündungsabschnitt (21) in lotrechter Richtung nach oben ausgerichteten Vorformlings (1) ausgebildet ist.

3. Vorrichtung nach Anspruch 1 oder 2, **dadurch gekennzeichnet, dass** das Kopfunterteil (53) mit einem Schaft (44) verbunden ist.

4. Vorrichtung nach Anspruch 3, **dadurch gekennzeichnet, dass** sich der Schaft (44) durch das Kopfoberteil (52) hindurcherstreckt.

5. Vorrichtung nach einem der Ansprüche 1 bis 4, **dadurch gekennzeichnet, dass** die Feder (56) als Druckfeder ausgebildet ist.

6. Vorrichtung nach einem der Ansprüche 1 bis 5, **dadurch gekennzeichnet, dass** sich der Schaft (44) durch die Feder (56) hindurcherstreckt.

7. Vorrichtung nach einem der Ansprüche 1 bis 6, **dadurch gekennzeichnet, dass** sich die Feder (56) an einem Vorsprung des Schaftes (44) abstützt.

8. Vorrichtung nach einem der Ansprüche 1 bis 7, **dadurch gekennzeichnet, dass** der Vorsprung durch einen Absatz (57) ausgebildet ist.

9. Vorrichtung nach einem der Ansprüche 1 bis 8, **dadurch gekennzeichnet, dass** der Schaft (44) aus einem Stab (58) und einem den Stab (58) bereichsweise umgebenden Rohr (59) ausgebildet ist.

10. Vorrichtung nach einem der Ansprüche 1 bis 9, **dadurch gekennzeichnet, dass** das Klemmelement (50) wenigstens bereichsweise zylindrisch ausgebildet ist und im Bereich seiner in Richtung der Elementlängsachse (45) weisenden Endbereiche Verjüngungen aufweist.

11. Vorrichtung nach Anspruch 10, **dadurch gekennzeichnet, dass** die Verjüngungen kegelstumpfartig ausgebildet sind.

12. Vorrichtung nach einem der Ansprüche 10 oder 11, **dadurch gekennzeichnet,**
**dass** die Verjüngungen relativ zur Elementlängsachse (45) Neigungswinkel aufweisen, die den Neigungswinkeln der Gleitflächen (54, 55) entsprechen.

## Claims

1. Device for blow moulding containers (2), which has a heating section (24) for heating preforms (1) of a thermoplastic material and which is provided with a blower device (25), which has at least one blowing station (3) for shaping the preforms (1) into the containers (2), and in the case of which a support element (41) for transporting the preforms (1) has at least two positionable clamping elements (50) comprising a passive clamping function in the region of a head (43), which can be inserted into a mouth section (21) of the preform (1), and in the case of which the clamping elements (50) are embodied so as to be rounded, and wherein the clamping elements (50) are arranged relative to one another at a distance at least area by area along an outer circumference of the head (43), and at least one of the clamping elements (50) is positioned in a depression (49), which is arranged laterally on the head (43) relative to a longitudinal axis of the support element (41), wherein the depression (49) has upper and lower sliding surfaces (54, 55), which run diagonally to the longitudinal axis (45), for impacting the clamping element (50), and wherein the head (43) has a lower head part (53), which is provided with the lower sliding surface (54), and an upper head part (52), which is provided with the upper sliding surface (55),
**characterised in that**
the upper head part (52) and the lower head part (53) are braced relative to one another by at least one spring (56), which impacts the upper head part (52) in a region, which faces away from the lower head part (53).

2. Device according to claim 1, **characterised in that** the support element (41) is embodied for holding a preform (1), the mouth section (21) of which is oriented upwards in vertical direction.

3. Device according to claim 1 or 2, **characterised in that** the lower head part (53) is connected to a shaft (44).

4. Device according to claim 3, **characterised in that** the shaft (44) extends through the upper head part (52).

5. Device according to any one of claims 1 to 4, **characterised in that** the spring (56) is embodied as compression spring.

6. Device according to any one of claims 1 to 5, **characterised in that** the shaft (44) extends through the spring (56).

7. Device according to any one of claims 1 to 6, **characterised in that** the spring (56) is supported on a projection of the shaft (44).

8. Device according to any one of claims 1 to 7, **characterised in that** the projection is embodied by a ledge (57).

9. Device according to any one of claims 1 to 8, **characterised in that** the shaft (44) is embodied of a rod (58) and of a pipe (59), which surrounds the rod (58) area by area.

10. Device according to any one of claims 1 to 9, **characterised in that** the clamping element (50) is embodied cylindrically at least area by area and has tapers in the region of its end regions, which are oriented in the direction of the longitudinal element axis (45).

11. Device according to claim 10, **characterised in that** the tapers are embodied in a truncated cone-shaped manner.

12. Device according to any one of claims 10 or 11, **characterised in that** the tapers have angles of inclination, which correspond to the angles of inclination of the sliding surfaces (54, 55), relative to the longitudinal element axis (45).

## Revendications

1. Dispositif de moulage par soufflage de récipients (2) présentant une zone de chauffage (24) pour le réchauffement de préformes (1) en un matériau thermoplastique et équipé d'un dispositif de soufflage (25) présentant au moins une station de soufflage (3) pour la transformation des préformes (1) en récipients (2), et dont un élément porteur (41) assurant le transport des préformes (1) présente, au niveau d'une tête (43) dotée d'une fonction de serrage passif et pouvant être introduite dans une section d'embouchure (21) de la préforme (1), au moins deux éléments de serrage (50) pouvant être positionnés, les éléments de serrage (50) étant de conformation arrondie et étant agencés avec un espacement entre eux le long d'une partie au moins d'une périphérie extérieure de la tête (43), l'un au moins des éléments de serrage (50) étant positionné dans une concavité (49) agencée latéralement au niveau de la tête (43) par rapport à un axe longitudinal de l'élément porteur (41), la concavité (49) présentant des surfaces de glissement (54, 55) supérieure et inférieure obliques par rapport à l'axe longitudinal (45) contre lesquelles vient s'appuyer l'élément de serrage (50) et la tête (43) présentant une partie inférieure (53) dotée de la surface de glissement inférieure (54) et une partie supérieure (52) dotée de la surface de glissement supérieure (55), **caractérisé en ce que** la partie supérieure (52) de la tête et la partie inférieure (53) de la tête sont serrées l'une vers l'autre par au moins un ressort (56) qui appuie sur la partie supérieure (52) de la tête dans une zone opposée à la partie inférieure (53) de la tête.

2. Dispositif selon la revendication 1, **caractérisé en ce que** l'élément porteur (41) est conformé en vue de maintenir une préforme (1) en position verticale avec sa section d'embouchure (21) orientée vers le haut.

3. Dispositif selon la revendication 1 ou 2, **caractérisé en ce que** la partie inférieure (53) de la tête est reliée à une tige (44).

4. Dispositif selon la revendication 3, **caractérisé en ce que** la tige (44) traverse la partie supérieure (52) de la tête.

5. Dispositif selon l'une des revendications 1 à 4, **caractérisé en ce que** le ressort (56) est réalisé sous forme de ressort de pression.

6. Dispositif selon l'une des revendications 1 à 5, **caractérisé en ce que** la tige (44) traverse le ressort (56).

7. Dispositif selon l'une des revendications 1 à 6, **caractérisé en ce que** le ressort (56) s'appuie contre un ressaut de la tige (44).

8. Dispositif selon l'une des revendications 1 à 7, **caractérisé en ce que** le ressaut est formé par un épaulement (57).

9. Dispositif selon l'une des revendications 1 à 8, **caractérisé en ce que** la tige (44) est formée par une barre (58) et un tube (59) entourant en partie la barre (58).

10. Dispositif selon l'une des revendications 1 à 9, **caractérisé en ce que** l'élément de serrage (50) est en partie au moins de forme cylindrique et présente des rétrécissements au niveau de ses extrémités longitudinales selon l'axe (45).

11. Dispositif selon la revendication 10, **caractérisé en ce que** les rétrécissements sont de forme tronconique.

12. Dispositif selon l'une des revendications 10 ou 11, **caractérisé en ce que** les rétrécissements présentent par rapport à l'axe longitudinal (45) de l'élément des angle d'inclinaison correspondant aux angle d'inclinaison des surfaces de glissement (54, 55).
